# EUROPÄISCHE PATENTSCHRIFT

(11) **EP 2 536 630 B1**
(45) Veröffentlichungstag und Bekanntmachung des Hinweises auf die Patenterteilung: **24.11.2021**
(21) Anmeldenummer: 11703892.7
(22) Anmeldetag: 16.02.2011
(51) Int. Cl.: B64D 11/02

(54) **TOILETTENANORDNUNG FÜR EIN VERKEHRSMITTEL**
TOILET ASSEMBLY FOR A MEANS OF TRANSPORTATION
INSTALLATION DE TOILETTES POUR MOYEN DE TRANSPORT

(30) Priorität: 19.02.2010 US 306213 P; 19.02.2010 DE 102010008625
(43) Veröffentlichungstag der Anmeldung: 26.12.2012
(60) Teilanmeldung: 21202448.3
(73) Patentinhaber: Airbus Operations GmbH, 21129 Hamburg (DE)
(72) Erfinder: SCHLIWA, Ralf, 21739 Dollern (DE); BARBER, Andreas, 21255 Kakenstorf (DE); STRASDAS, Maria, 21635 Jork (DE)
(74) Vertreter: LKGLOBAL Lorenz & Kopf PartG mbB Patentanwälte
(86) Internationale Anmeldenummer: PCT/EP2011/052307
(87) Internationale Veröffentlichungsnummer: WO 2011/101385

(56) Entgegenhaltungen:
- EP-A2- 0 867 365
- EP-A2- 1 209 078
- EP-A2- 1 338 508
- WO-A1-03/064790
- WO-A2-2004/076279
- DE-A1- 4 336 418
- FR-A1- 2 929 244

## Beschreibung

### TECHNISCHES GEBIET

Die Erfindung betrifft eine Toilettenanordnung für ein Verkehrsmittel. Insbesondere betrifft die Erfindung eine Toilettenanordnung für ein Luftfahrzeug, die Verwendung einer derartigen Toilettenanordnung in einem Luftfahrzeug, sowie ein Luftfahrzeug mit einer derartigen Toilettenanordnung.

### HINTERGRUND DER ERFINDUNG

Ein wesentliches Ziel bei der Einrichtung von Passagierkabinen in Verkehrsmitteln ist häufig die Maximierung der zur Verfügung stehenden Anzahl von Passagiersitzen, die durch die Anzahl von vorgeschriebenen Sitzen für Besatzungsmitglieder eingeschränkt wird, weiterhin durch vorgeschriebene Sicherheitseinrichtungen, beliebige Versorgungseinrichtungen und Toiletten. Das Verhältnis der Anzahl von Passagiersitzen zu übrigen Einrichtungen in Passagierkabinen ist ein Faktor, der die Wirtschaftlichkeit eines Flugzeugs im Linienverkehr mitbestimmt. Neben behördlichen Vorschriften für Muster- und Betriebszulassung von Verkehrsmitteln sind bei Auswahl von Sitzgrößen, Sitzabständen, Versorgungseinrichtungen und Toiletten auch Kundenwünsche, beispielsweise kundenspezifische Sondereinbauten von Betreibern des Verkehrsmittels, mit einzubeziehen. Je nach Gestaltung von Einbauten in der Passagierkabine und deren Platzbedarf können intelligente Konstruktions- und Anordnungslösungen die Anzahl von Passagiersitzen optimieren.

Aus Platzgründen und mangels anderweitiger Vorschriften existieren im Stand der Technik Verkehrsmittel, die lediglich Standardtoiletten aufweisen, jedoch keine eigenständigen Toiletten für bewegungseingeschränkte Personen. Derartige Toiletten, die im Folgenden auch "Behindertentoiletten" genannt werden, sollten etwa in der Lage sein, mit einem Rollstuhl befahren zu werden. Insbesondere in Flugzeugen sind derartige, einen deutlich erhöhten Bauraumbedarf aufweisende Behindertentoiletten kaum zu finden, denn diese reduzieren deutlich die Wirtschaftlichkeit des betreffenden Flugzeugs, bei gleichzeitig sehr geringer Benutzungsfrequenz.

DE 43 00 877 A1 und US 5 474 260 A zeigen ein Flugzeug mit einer Reihe von Versorgungseinrichtungen und Toiletten, die als eigenständige, herkömmliche Toilettenräume konzipiert sind.

Die EP 1338508 A2 bezieht sich, laut der Zusammenfassung, auf eine erweiterbare, modulare Multimodus-Toilette für Flugzeuge, die in mehreren Modi als Toilette, Dusche und Unterbringung für behinderte Personen verwendet werden kann. Der Vorschlag umfasst eine primäre Struktur mit einem Volumen, das sich in einen angrenzenden, ungenutzten Raum ausdehnt, wie z.B. den Haupteingangsbereich eines Flugzeugs. Ausfahrbare Wände und Türen werden verwendet, um eine abgetrennte Umgebung zu schaffen.

Die EP 1209078 A2 bezieht sich, laut der Zusammenfassung, auf eine Toiletteneinheit, die einen kastenförmigen Toilettenkörper aus Plattenmaterial umfasst, der in einer geeigneten Position auf einer Bodenplatte eines Flugzeugs positioniert ist. Im Inneren des Toilettenkörpers ist eine Toiletteneinheit an einer Bodenplatte befestigt, und an einer Seite der Toiletteneinheit ist eine Waschbeckeneinheit angeordnet. Im Toilettenkörper ist ein Staumodul untergebracht, das aus dem Körper herausgezogen und wieder in ihm verstaut werden kann. Das Staumodul umfasst z.B. einen Schrank zur Aufbewahrung von Mänteln und Jacken der Fahrgäste usw. Es wird ein Zustand gezeigt, in dem der Schrank aus dem Toilettenkörper herausgezogen wird, wodurch die Toiletteneinheit erweitert wird. Der Raum innerhalb der Toilette wird vergrößert, so dass eine Sitzbank usw. verwendet werden kann, was den Service für die Passagiere verbessert. Ein Teil des herausgezogenen Schranks ragt in den Raum vor der Flugzeugtür, aber da dieser Platz während des Flugs nicht genutzt wird, wird der Raum im Flugzeug effizient genutzt.

Die EP 0867365 A2 bezieht sich, laut der Zusammenfassung, auf eine zweifach schwenkbar erweiterbare Toilette zur Verwendung in begrenzten Räumen, wie beispielsweise in einem Flugzeug. Die Toilette kann in der Nähe des Türbereichs des Flugzeugs positioniert werden und ist mit einem primären und einem sekundären schwenkbaren Modul versehen. Jedes Modul ist schwenkbar an einer stationären Baugruppe befestigt, die üblicherweise an der Decke und am Boden des Flugzeugs angebracht ist. Während des Starts und der Landung werden beide Module mittels eines Verriegelungssystems in einer verstauten Position innerhalb der stationären Baugruppe verriegelt. Im normalen Flugbetrieb wird die Verriegelung gelöst und beide Module werden in eine ausgefahrene Position im Türbereich geschwenkt. An der Außenseite des Hauptmoduls kann ein Flugbegleitersitz angebracht werden. Wenn der Sitz verwendet wird, wird ein zusätzlicher Stützfuß am Primärmodul angebracht, um die zusätzliche Belastung der Toilette aufzunehmen.

Die DE 4336418 A1 bezieht sich, laut der Zusammenfassung, auf ein Sanitärzellensystem für Schienenfahrzeuge, das auf der Basis eines modularen Aufbaus für die unterschiedlichsten Benutzerkreise (Behinderte, Nichtbehinderte, Personen beiderlei Geschlechts) und variabel an den verschiedensten Gebieten einsetzbar ist.

Die WO 03/064790 A1 bezieht sich, laut der Zusammenfassung, auf eine Toilettenkonstruktion mit mindestens zwei nebeneinander angeordneten Toilettenkabinen, die jeweils eine Toilette und eine durch eine Tür verschließbare Zugangsöffnung aufweisen, wobei die Toilettenkabinen durch eine Trennwand getrennt sind. Die Trennwand ist zwischen einer Trennstellung, in der sie die Toilettenkabinen voneinander trennt, und einer Freigabestellung, in der die beiden Toilettenkabinen zusammen eine einzelne Toilettenkabine bilden, verschiebbar. Alternativ kann die Trennwand im Wesentlichen senkrecht zu ihrer Wandebene in eine Verschiebeposition verschoben werden, in der die Grundfläche der einen Toilettenkabine vergrößert und die Grundfläche der anderen Toilettenkabine verkleinert wird.

Die WO 2004/076279 A2 bezieht sich, laut der Zusammenfassung, auf einen Toilettenkomplex für ein Flugzeug, der eine Männertoilette und eine Damentoilette umfasst. Die Männertoilette enthält Kabineneinheiten und kann Urinale enthalten. Die Damentoilettenanlage umfasst Kabineneinheiten. Jede Kabineneinheit enthält zweckmäßigerweise eine einzelne Toilette. Die Männertoilette und die Damentoilette enthalten mindestens ein Waschbecken, das durch Türen von den Kabinen getrennt ist. Der Toilettenkomplex kann auch Waschbecken enthalten, die sich nicht in der Männertoilette oder der Damentoilette befinden.

Die FR 2929244 bezieht sich, laut der Zusammenfassung, auf einen Flugzeugrumpf, der eine Wand und Seitentüren sowie einen hinter der am weitesten hinten liegenden Seitentür angeordneten Raum aufweist. Der Arbeits- und Lagerraum wird durch Seitenwände, die durch den Rumpf des Flugzeugs gebildet werden, und durch ein Querschott abgegrenzt. Dieser Raum umfasst Staufächer für Trolleys, die entlang des besagten Querschotts angeordnet sind. Ein Gang dient den entlang des Querschotts angeordneten Staufächern und hat einen Querab schnitt, der vollständig hinter der am weitesten hinten im Flugzeug befindlichen Seitentür angeordnet ist. Mindestens ein Staufach für einen Trolley ist auf der anderen Seite des Querabschnitts des Gangs in Bezug auf die entlang der Wand angeordneten Staufächer angeordnet, und jedes der genannten Staufächer zur Aufnahme eines Trolleys erstreckt sich in Längsrichtung in Bezug auf eine Längsachse relativ zum Flugzeug.

### ZUSAMMENFASSUNG DER ERFINDUNG

Es ist eine Aufgabe der Erfindung, eine Toilettenanordnung für ein Verkehrsmittel anzugeben, die eine Benutzung durch bewegungseingeschränkte Personen erlaubt, aber dennoch die Wirtschaftlichkeit des Verkehrsmittels nicht übermäßig einschränkt.

Es sind eine Toilettenanordnung für ein Verkehrsmittel, die Verwendung einer Toilettenanordnung in einem Luftfahrzeug und ein Luftfahrzeug angegeben. Weiterbildungen der Erfindung ergeben sich aus den Unteransprüchen.

Die beschriebenen Ausführungsbeispiele betreffen gleichermaßen die Toilettenanordnung, die Verwendung und das Luftfahrzeug. In anderen Worten lassen sich auch alle im Folgenden beispielsweise im Hinblick auf die Toilettenanordnung genannten Merkmale für die Verwendung oder in dem Luftfahrzeug umsetzen.

Gemäß der Erfindung ist eine Toilettenanordnung für ein Verkehrsmittel angegeben, welche einen ersten Toilettenraum, einen dazu benachbarten zweiten Toilettenraum und eine zwischen dem ersten Toilettenraum und dem zweiten Toilettenraum befindliche Trennwand aufweist. Die Trennwand ist bewegbar gelagert und dazu eingerichtet, in eine Öffnungsposition gebracht zu werden, bei der eine Abtrennung zwischen dem ersten Toilettenraum und dem zweiten Toilettenraum aufgehoben wird.

Dies bedeutet mit anderen Worten, dass die erfindungsgemäße Toilettenanordnung aus zwei benachbarten Toilettenräumen besteht, die durch Bewegen in eine Öffnungsposition einen einzigen, deutlich größeren "gemeinsamen" Toilettenraum ausbildet, der zum Befahren mit einem Rollstuhl und zum vorübergehenden Lagern des Rollstuhls auf einer begehbaren Fläche einer der beiden ursprünglich voneinander unabhängigen Toilettenräume ausreicht. Gleichzeitig ist der gemeinsame Toilettenraum derart dimensioniert, dass es sogar einer zweiten Person ermöglicht werden kann, einer bewegungseingeschränkten Person in dem gemeinsamen Toilettenraum behilflich zu sein, beispielsweise beim Umsetzen von einem Rollstuhl auf einen Toilettensitz. Die besonderen Vorteile der erfindungsgemäßen Toilettenanordnung liegen darin, zwei eigenständige Toilettenräume durch einfache Handgriffe zu einem gemeinsamen Toilettenraum zu kombinieren, so dass lediglich bei Bedarf eine Behindertentoilette geschaffen wird, gleichzeitig aber auch kein Bauraum innerhalb der Kabine des Verkehrsmittels zusätzlich beansprucht wird, so dass die Wirtschaftlichkeit des Verkehrsmittels überhaupt nicht darunter leidet.

Die Bewegung der Trennwand kann auf beliebige Art und Weise realisiert werden, etwa durch Klappen, Verschwenken, Schieben oder dergleichen. Desweiteren könnte die Trennwand nach Art einer Jalousientür ausgeführt sein und bei Bedarf horizontal oder vertikal auf- und abgerollt werden.

Gemäß einer weiteren Ausführungsform der Erfindung weist die Trennwand mindestens einen Verriegelungsmechanismus auf, der durch Betätigen eines Betätigungsmittels die Trennwand in mindestens einer Öffnungsposition und mindestens einer Schließposition arretiert. Dadurch wird die Konvertierung der zwei Toilettenräume vereinfacht, da die Trennwand an einer definierten Stelle positioniert ist und durch Vibrationen oder dergleichen nicht aus der vorhergesehenen Position gelöst werden kann. Dies vereinfacht auch die Benutzung der erfindungsgemäßen Toilettenanordnung, da die Trennwand nicht plötzlich durch Vibrationen mitten in dem gemeinsamen Toilettenraum steht und sich etwa mit einem Rollstuhl verklemmt.

Ein vorteilhafter Verriegelungsmechanismus könnte sich über die gesamte Raumhöhe der Kabine des Verkehrsmittels erstrecken, so dass die Trennwand sowohl an einem Fußboden der Kabine befestigt wird, als auch an einer Decke der Kabine. Es würde sich anbieten, ein Betätigungsmittel in Hüfthöhe an der Trennwand anzubringen, von der sich jeweils ein linienförmiges Bewegungsmittel zu dem Fußboden und/oder der Decke der Kabine erstreckt, etwa ein Bowdenzug, eine Schubstange, ein Seil oder dergleichen. Durch Betätigen des Betätigungsmittels könnten dadurch Zapfen oder Stifte in Öffnungen in dem Fußboden und/oder der Decke der Kabine eingebracht werden oder aus diesen herausgelöst werden. Ebenso könnte die Ver- und Entriegelung der Tür- und Trennwandelemente elektrisch, hydraulisch, pneumatisch oder auf andere Weise automatisiert durchgeführt werden. Autorisiertes Personal könnte demnach die Verriegelung ohne zusätzliches Werkzeug, beispielsweise durch Betätigen eines für Passagiere nicht zugänglichen Schalters außerhalb der Toilettenräume lösen, um den Umbau durchzuführen.

An dieser Stelle sei darauf hingewiesen, dass der Verriegelungsmechanismus der Trennwand möglichst nur von einem Besatzungsmitglied des Verkehrsmittels bewegt werden können sollte, damit eine versehentliche Bedienung aus einem der beiden Toilettenräume ausgeschlossen und die Privatsphäre eines Benutzers des angrenzenden Toilettenraums gesichert werden kann. Hier könnte sich ein Schloss oder ein anderes Betätigungsmittel anbieten, welches nur mit einem speziellen Schlüssel oder einem anderen speziellen Werkzeug betätigt werden kann, wie etwa über ein Dreiecks-Profil oder dergleichen.

Gemäß der Erfindung ist die Trennwand aus zwei einzelnen Trennwandsegmenten aufgebaut, die beide bewegbar gelagert sind, zum Beispiel individuell und separat voneinander. Diese Trennwand könnte sich beispielsweise wie ein Flügeltürpaar verhalten, so dass beide Trennwandsegmente in unterschiedliche Richtungen aufgeschwenkt werden können.

Gemäß der Erfindung ist ein erstes Trennwandsegment dazu eingerichtet, von einer Position zwischen dem ersten Toilettenraum und dem zweiten Toilettenraum an eine erste Seitenwand des ersten oder des zweiten Toilettenraums verschwenkt zu werden, während das zweite Trennwandsegment dazu eingerichtet ist, in einen Bereich aufgeschwenkt zu werden, der weder in dem ersten Toilettenraum noch in dem zweiten Toilettenraum liegt. Nach Befahren des gemeinsamen Toilettenraums kann das zweite Trennwandsegment wieder zu dem gemeinsamen Toilettenraum zurückgeschwenkt werden, um beispielsweise als Tür oder Verschlussklappe der erfindungsgemäßen Toilettenanordnung verwendet zu werden.

Gemäß einer weiteren Ausführungsform der erfindungsgemäßen Toilettenanordnung stehen die Erstreckungsachsen des ersten Toilettenraums und des zweiten Toilettenraums im Wesentlichen senkrecht zueinander. Dies bedeutet, dass der erste Toilettenraum und der zweite Toilettenraum eine L-Form bilden, die besonders für die Unterteilung der Trennwand in zwei Trennwandsegmente vorteilhaft ist.

Gemäß einer weiteren Ausführungsform der vorliegenden Erfindung weist der erste Toilettenraum eine erste Toilettenraumtür auf, die um eine erste Türscharnierachse schwenkbar gelagert ist, wobei diese erste Türscharnierachse von dem zweiten Toilettenraum beabstandet angeordnet ist. Dadurch kann die erste Toilettenraumtür parallel zu der Erstreckungsrichtung des zweiten Toilettenraums und von dem zweiten Toilettenraum beabstandet geschwenkt werden, um dort als eine Seitenfläche eines Eingangsbereichs eines gemeinsamen Toilettenraums verwendet werden.

Gemäß einer weiteren Ausführungsform der Erfindung sind die Trennwandsegmente schwenkbar gelagert. Das zweite Trennwandsegment ist dazu eingerichtet, mit der ersten Toilettenraumtür verbunden zu werden oder an ihr arretiert zu werden, so dass die Kombination aus erster Toilettenraumtür und zweitem Trennwandsegment einen neuen Eingangsbereich eines gemeinsamen Toilettenraums ausbildet. Da sowohl die erste Toilettenraumtür als auch das zweite Trennwandsegment außerhalb des ersten und des zweiten Toilettenraums positioniert sind, kann ohne zusätzliche Beanspruchung von Bauraum mehr Fläche für den gemeinsamen Toilettenraum angeboten werden, als von den beiden separaten Toilettenräumen zusammen.

Gemäß einer weiteren Ausführungsform der Erfindung ist an dem ersten Toilettenraum an einem vom zweiten Toilettenraum beabstandeten Ende ein Kabinenmonument angeordnet. Insbesondere bei einer L-förmigen Anordnung der beiden Toilettenräume zueinander kann restlicher Bauraum beispielsweise im Heck des Verkehrsmittels genutzt werden, um eine möglichst kompakte Integration von verschiedenen Funktionen zu erreichen.

Gemäß einer weiteren Ausführungsform der Erfindung ist dieses zusätzliche Monument eine Bordküche.

Gemäß einer weiteren Ausführungsform ist das zusätzliche Monument ein dritter Toilettenraum.

Grundsätzlich ist die erfindungsgemäße Toilettenanordnung mit Hilfsmitteln wie Griffen, Bügeln und dergleichen ausstattbar, die es bewegungseingeschränkten Personen ermöglichen, sich darin sicher und eigenständig bewegen zu können.

Neben der Verwendung wird außerdem ein Luftfahrzeug vorgeschlagen, das mindestens eine Passagierkabine sowie mindestens eine erfindungsgemäße Toilettenanordnung aufweist. Bevorzugt kann die erfindungsgemäße Toilettenanordnung in einem Rumpfheck angeordnet sein, das im Fall eines aktiv druckbeaufschlagten Flugzeugrumpfs üblicherweise ein vom Rumpf aus gesehen konkaves Druckschott aufweist. Durch die konkave Formgebung wird zusätzlicher Bauraum bereitgestellt, der von der erfindungsgemäßen Toilettenanordnung nutzbar gemacht wird, etwa zur Integration von Waschbecken oder dergleichen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele in den Figuren. In den Figuren stehen weiterhin gleiche Bezugszeichen für gleiche oder ähnliche Objekte.
Fig. 1 zeigt eine Hecksektion einer Flugzeugkabine mit einer erfindungsgemäßen Toilettenanordnung.
Fig. 2a-2f zeigen eine Hecksektion einer Flugzeugkabine mit einer erfindungsgemäßen Toilettenanordnung im Verlauf einer Konvertierung von zwei voneinander getrennten Toilettenräumen zu einem gemeinsamen Toilettenraum.
Fig. 3 zeigt eine Abwandlung einer erfindungsgemäßen Toilettenanordnung.
Fig. 4 zeigt ein Flugzeug mit mindestens einer Passagierkabine und mindestens einer erfindungsgemäßen Toilettenanordnung.

### DETAILLIERTE DARSTELLUNG EXEMPLARISCHER

### AUSFÜHRUNGSFORMEN

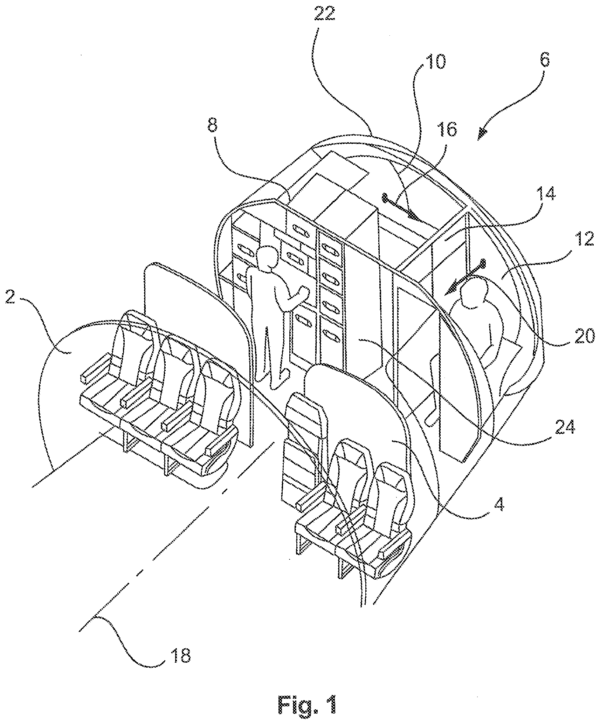

In Fig. 1 wird eine Hecksektion einer Passagierkabine 2 eines Flugzeugs gezeigt, bei der eine letzte Sitzreihe mit daran anschließenden Partitionen 4 zu sehen ist, hinter der sich eine erfindungsgemäße Toilettenanordnung 6 sowie ein weiteres Monument 8 anschließen. Die erfindungsgemäße Toilettenanordnung 6 weist einen ersten Toilettenraum 10, einen davon unabhängigen zweiten Toilettenraum 12 und eine dazwischen liegende Trennwand 14 auf. Der erste Toilettenraum 10 weist eine Erstreckungsrichtung 16 auf, die senkrecht zu einer Längsachse 18 des Flugzeugrumpfs 2 ausgerichtet ist. Der zweite Toilettenraum 12 weist eine Erstreckungsrichtung 20 auf, die im Wesentlichen parallel zu der Längsachse 18 des Flugzeugrumpfs 2 verläuft. Dies bedeutet, dass der erste Toilettenraum 10 und der zweite Toilettenraum 12 in der gezeigten Darstellung exemplarisch zueinander senkrecht stehende Erstreckungsrichtungen 16 und 20 aufweisen und dadurch eine L-Form ausbilden.

In dem gezeigten Ausführungsbeispiel ist die erfindungsgemäße Toilettenanordnung 6 derart in einem Heckbereich der Passagierkabine 2 angeordnet, dass ein für einen aktiv druckbeaufschlagten Flugzeugrumpf 2 übliches Druckschott 22 der Passagierkabine 2 als äußerste Abschlusswand dient. Durch die konkave Formgebung wird zusätzlicher Bauraum bzw. Bewegungsraum für Personen und Grundfläche bereitgestellt, so dass die erfindungsgemäße Toilettenanordnung 6 äußerst kompakt gestaltet sein kann.

Der zweite Toilettenraum 12 ist exemplarisch durch eine backbordseitige Rumpfwand nach außen hin begrenzt, der erste Toilettenraum 10 schließt sich bündig an den zweiten Toilettenraum 12 an. Dies bedeutet bei der gezeigten Größe des Flugzeugrumpfs, dass an einem Ende des ersten Toilettenraums 10, welches von dem zweiten Toilettenraum 12 beabstandet ist, zusätzlicher Bauraum für das Monument 8 bereitgestellt ist, so dass die Hecksektion der Passagierkabine 2 besonders effizient genutzt werden kann. In dem gezeigten Beispiel ist das zusätzlich angebrachte Monument 8 als eine Flugzeugküche realisiert, deren Erstreckung in der Kabinenquerrichtung auf die Größe der ersten Toilettenraumtür 24 zur uneingeschränkten Verwendbarkeit abgestimmt ist.

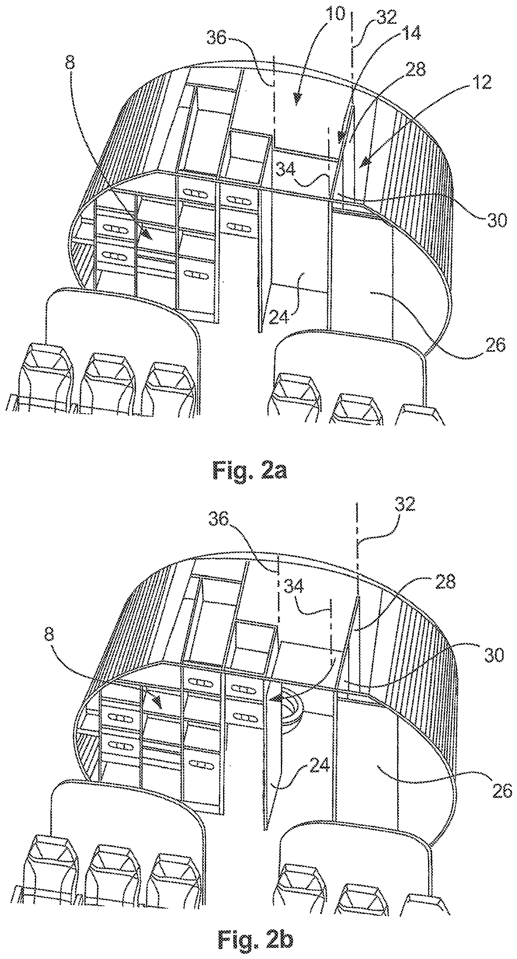

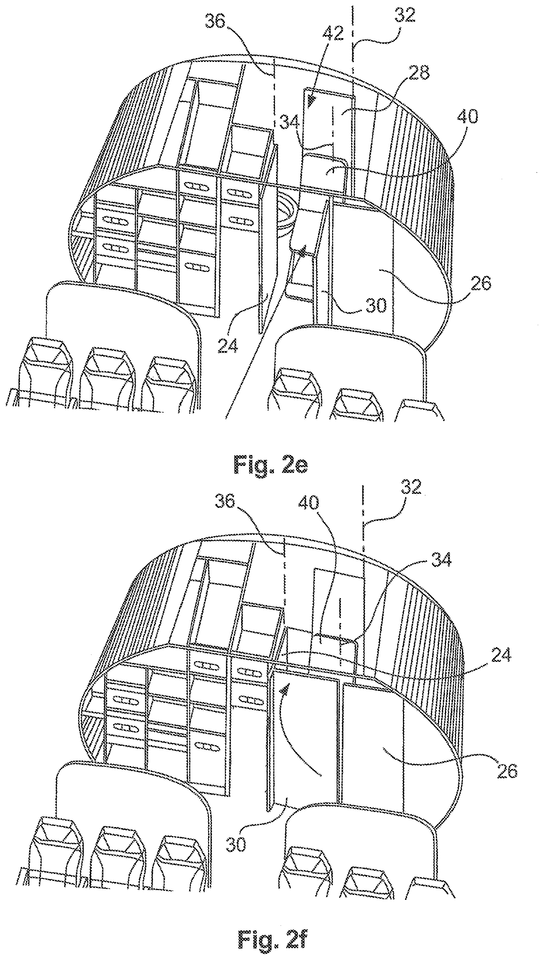

Im weiteren Verlauf wird auf die Konvertierbarkeit der erfindungsgemäßen Toilettenanordnung 6 mit Bezugnahme auf die Figuren 2a bis 2f detailliert eingegangen. Dort wird die Anordnung aus Fig. 1 gezeigt, der Einfachheit halber jedoch ohne darin befindliche Personen sowie aus einem etwas geänderten Betrachtungswinkel. Die zwei Toilettenräume der erfindungsgemäßen Toilettenanordnung können mit wenigen Handgriffen und bevorzugt ohne Zuhilfenahme von Werkzeug, der Hinzufügung oder Entnahme von Bauteilen und ohne Einschränkungen während des Flugs, bevorzugt durch einen Flugbegleiter, in einen vergrößerten Toilettenraum umgewandelt werden. Nach Benutzung dieses vergrößerten Toilettenraums kann die erfindungsgemäße Toilettenanordnung wieder zu zwei voneinander getrennten Toilettenräumen umgebaut werden.

Zunächst ist in Fig. 2a der erste Toilettenraum 10 durch die ersten Toilettenraumtür 24 geschlossen. Der zweite Toilettenraum 12 ist durch eine zweite Toilettenraumtür 26 ebenfalls geschlossen. Zwischen den Toilettenräumen 10 und 12 befindet sich eine Trennwand 14, die aus einem ersten Trennwandsegment 28 und einem zweiten Trennwandsegment 30 besteht. In dem gezeigten Beispiel ist das erste Trennwandsegment 28 an einer Scharnierachse 32 gelagert, das zweite Trennwandsegment 30 ist an einer Scharnierachse 34 gelagert. Die beiden Scharnierachsen 32 und 34 sind in dem gezeigten Beispiel voneinander beabstandet positioniert, demnach ist die Trennwand 14 als eine Art Flügel- oder Doppeltür ausgebildet und der zwischen den beiden Scharnierachsen 32 und 34 befindliche Bereich bildet die Begrenzung in Längsrichtung des zweiten Toilettenraums 12.

Um die beiden Toilettenräume 10 und 12 zu einem gemeinsamen Toilettenraum zu verbinden, wird zunächst die erste Toilettenraumtür 24 nach außen von den beiden Toilettenräumen 10 und 12 weg gerichtet geöffnet, wie in Fig. 2b durch einen Pfeil angedeutet. Dies geschieht durch eine Schwenkbewegung der ersten Toilettenraumtür 24 um eine Scharnierachse 36, die an einer Begrenzungswand des ersten Toilettenraums 10 angeordnet ist.

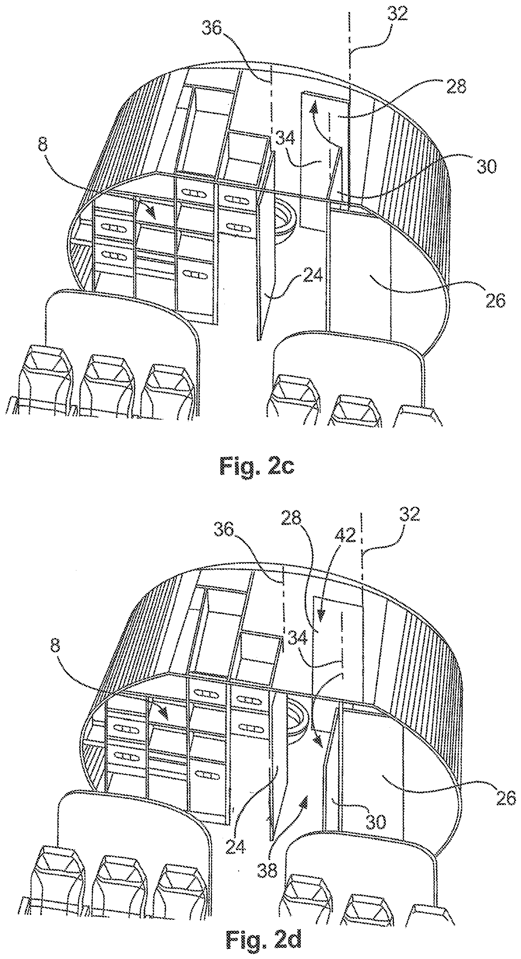

Anschließend wird das erste Trennwandsegment 28, wie in Fig. 2c zu sehen, nach einer entsprechenden Entriegelung aus einem Kabinenfußboden und/oder einer Kabinendecke und/oder dem zweiten Trennwandsegment 30 um die Scharnierachse 32 zu dem Druckschott 22 hin bewegt, so dass eine Öffnung zwischen dem ersten Toilettenraum 10 und dem zweiten Toilettenraum 12 entsteht. In dieser erreichten Position ist es besonders vorteilhaft, das erste Trennwandsegment 28 zu verriegeln und dadurch dessen Position bis zu ihrer erneuten Entriegelung festzulegen.

In einem weiteren Schritt wird das zweite Trennwandsegment 30, wie in Fig. 2d zu sehen, nach einer Entriegelung aus dem Kabinenfußboden und/oder der Kabinendecke um die Scharnierachse 34 um grob 180° nach außen bewegt, so dass dadurch der erste Toilettenraum 10 und der zweite Toilettenraum 12 vollständig miteinander verbunden werden. In dieser Position entsteht eine Öffnung 38, durch die ein Rollstuhl 40 mühelos in den nun gemeinsamen Toilettenraum 42 eingebracht werden kann.

Nach einer anschließenden Verschwenkung des zweiten Trennwandsegments 30 um die Scharnierachse 34 zu der Öffnung 38 hin entsteht eine Abtrennung des gemeinsamen Toilettenraums 42 nach außen. Das zweite Trennwandsegment 30 wird dementsprechend als neue Eingangstür zu dem gemeinsamen Toilettenraum 42 verwendet. Weiterhin bildet in dieser Anordnung die erste Toilettenraumtür 24 eine Seitenwand des Eingangsbereichs zu dem gemeinsamen Toilettenraum 42, die parallel zu der Erstreckungsrichtung 20 des zweiten Toilettenraums 12 und beabstandet zu dem zweiten Toilettenraum 12 angeordnet ist.

In dem gemeinsamen Toilettenraum 42 ist nun ausreichend Raum vorhanden, von dem Rollstuhl 40 auf einen Toilettensitz oder dergleichen zu gelangen. Bei Bedarf kann der gemeinsame Toilettenraum 42 wieder in zwei voneinander separate Toilettenräume 10 und 12 zurückkonvertiert werden.

Es ist für einen Fachmann verständlich, dass die Trennwandsegmente 28 und 30 sowie die erste Toilettentür 24 mit mindestens einem Verriegelungsmechanismus ausgestattet sind, so dass diese Elemente in den unterschiedlichen Positionen aus den Figuren 1 bis 2f arretiert werden können.

Gleichermaßen sollte sichergestellt werden, dass die zweite Toilettenraumtür 26 nach einer Konvertierung zu einem größeren Toilettenraum von innen verriegelt wird, um den Zutritt von dritten Personen zu verhindern. Bei Bedarf sollte es jedoch einem Flugbegleiter möglich sein, die zweite Toilettenraumtür 26 von außen zu entriegeln, wenn Hilfe benötigt wird.

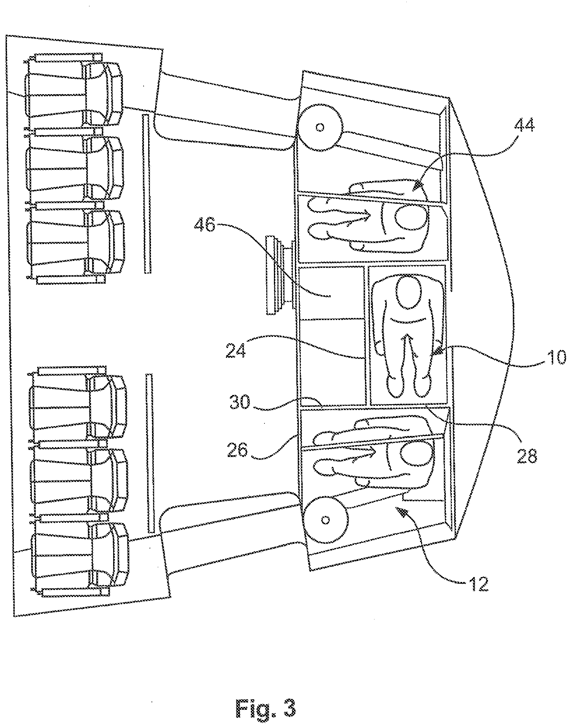

Wie in Fig. 3 gezeigt, kann bei der erfindungsgemäßen Toilettenanordnung 6 als zusätzliches Monument auch ein zusätzlicher, dritter Toilettenraum 44 hinter einem ersten Toilettenraum 10 auf einer zum zweiten Toilettenraum 12 beabstandeten Seite angeordnet werden, um eine möglichst kompakte und einen geringen Bauraum beanspruchende erfindungsgemäße Toilettenanordnung realisieren zu können.

Zusätzlich könnte ein Bereich an einer Berührungsstelle zwischen dem erstem Toilettenraum 10 und dem dritten Toilettenraum 44 dazu dienen, einen Stauschrank 46 aufzunehmen, der auf die Breite der ersten Toilettentür 24 angepasst ist.

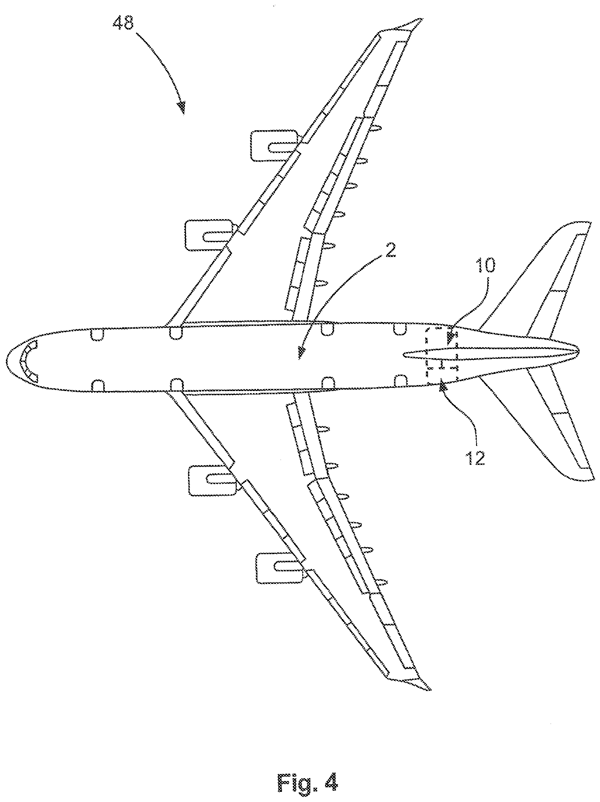

Schließlich zeigt Fig. 4 ein exemplarisches Flugzeug 48, das eine oder mehrere Passagierkabinen 2 aufweisen könnte, die mit einer oder mehreren erfindungsgemäßen Toilettenanordnungen gemäß den obigen Darstellungen ausgerüstet sein könnte.

Ergänzend sei darauf hinzuweisen, dass "aufweisend" keine anderen Elemente oder Schritte ausschließt und "ein" oder "eine" keine Vielzahl ausschließt.

### BEZUGSZEICHEN

- 2: Passagierkabine
- 4: Partition
- 6: Erfindungsgemäße Toilettenanordnung
- 8: Monument
- 10: Erster Toilettenraum
- 12: Zweiter Toilettenraum
- 14: Trennwand
- 16: Erstreckungsrichtung
- 18: Längsachse
- 20: Erstreckungsrichtung
- 22: Druckschott
- 24: Erste Toilettentür
- 26: Zweite Toilettentür
- 28: Erstes Trennwandsegment
- 30: Zweites Trennwandsegment
- 32: Scharnierachse
- 34: Scharnierachse
- 36: Scharnierachse
- 38: Öffnung
- 40: Rollstuhl
- 42: Gemeinsamer Toilettenraum
- 44: Dritter Toilettenraum
- 46: Stauschrank
- 48: Flugzeug

## Patentansprüche

1. Toilettenanordnung für ein Verkehrsmittel, aufweisend
- einen ersten Toilettenraum (10),
- einen dazu benachbarten zweiten Toilettenraum (12) und
- eine zwischen dem ersten Toilettenraum (10) und dem zweiten Toilettenraum (12) befindliche Trennwand (14, 28, 30),
wobei die Trennwand (14) bewegbar gelagert ist und dazu eingerichtet ist, in eine Öffnungsposition gebracht zu werden, bei der eine Abtrennung zwischen dem ersten Toilettenraum (10) und dem zweiten Toilettenraum (20) aufgehoben wird;
wobei die Trennwand (14, 28, 30) aus zwei einzelnen Trennwandsegmenten (28, 30) aufgebaut ist, die bewegbar gelagert sind;
wobei ein erstes Trennwandsegment dazu eingerichtet ist, an eine erste Seitenwand des ersten Toilettenraums (10) geklappt zu werden, während das zweite Trennwandsegment dazu eingerichtet ist, in einen Bereich aufgeschwenkt zu werden, der nicht in dem ersten Toilettenraum (10) und nicht in dem zweiten Toilettenraum (12) liegt.

2. Toilettenanordnung nach einem der vorhergehenden Ansprüche, wobei eine Haupterstreckungsrichtung (16) des ersten Toilettenraums (10) und eine Haupterstreckungsrichtung (20) des zweiten Toilettenraums (12) im Wesentlichen senkrecht zueinander stehen.

3. Toilettenanordnung nach einem der vorhergehenden Ansprüche, wobei der erste Toilettenraum (10) eine erste Toilettenraumtür (24) aufweist, die um eine erste Türscharnierachse (36) schwenkbar gelagert ist, wobei die erste Türscharnierachse (36) von dem zweiten Toilettenraum (12) beabstandet angeordnet ist.

4. Toilettenanordnung nach einem der vorhergehenden Ansprüche, wobei an einem vom zweiten Toilettenraum beabstandeten Ende des ersten Toilettenraums (10) ein Kabinenmonument (8) angeordnet ist.

5. Toilettenanordnung nach Anspruch 4, wobei das Kabinenmonument (8) eine Bordküche ist.

6. Toilettenanordnung nach Anspruch 4, wobei das Kabinenmonument (8) ein dritter Toilettenraum (44) ist.

7. Verwendung einer Toilettenanordnung nach einem der Ansprüche 1 bis 6 in einem Transportmittel.

8. Luftfahrzeug (48) mit mindestens einer Passagierkabine und mindestens einer darin angeordneten Toilettenanordnung nach einem der Ansprüche 1 bis 6.

9. Luftfahrzeug (48) nach Anspruch 8, wobei die mindestens eine Toilettenanordnung in einem Heckbereich der mindestens einen Passagierkabine angeordnet ist und direkt an einem als Begrenzungswand dienenden Druckschott (22) angeordnet ist.

## Claims

1. Toilet arrangement for a means of transport, having
- a first toilet compartment (10),
- a second toilet compartment (12), which is adjacent to the first, and
- a separating wall (14, 28, 30), which is situated between the first toilet compartment (10) and the second toilet compartment (12),
wherein the separating wall (14) is mounted in a movable manner and is configured to be brought into an open position in which there is no separation between the first toilet compartment (10) and the second toilet compartment (20);
wherein the separating wall (14, 28, 30) is constructed from two individual separating wall segments (28, 30) which are mounted in a movable manner;
wherein a first separating wall segment is configured to be swung onto a first side wall of the first toilet compartment (10), while the second separating wall segment is configured to be pivoted into a region which is not situated in the first toilet compartment (10) and which is not situated in the second toilet compartment (12).

2. Toilet arrangement according to one of the preceding claims, wherein a main direction of extent (16) of the first toilet compartment (10) and a main direction of extent (20) of the second toilet compartment (12) are substantially perpendicular to one another.

3. Toilet arrangement according to either of the preceding claims, wherein the first toilet compartment (10) has a first toilet compartment door (24), which is mounted so as to be pivotable about a first door hinge axis (36), wherein the first door hinge axis (36) is arranged spaced apart from the second toilet compartment (12) .

4. Toilet arrangement according to one of the preceding claims, wherein a cabin monument (8) is arranged on an end of the first toilet compartment (10) that is spaced apart from the second toilet compartment.

5. Toilet arrangement according to Claim 4, wherein the cabin monument (8) is a galley.

6. Toilet arrangement according to Claim 4, wherein the cabin monument (8) is a third toilet compartment (44).

7. Use of a toilet arrangement according to one of Claims 1 to 6 in a means of transport.

8. Aircraft (48) having at least one passenger cabin and having at least one toilet arrangement according to one of Claims 1 to 6 arranged therein.

9. Aircraft (48) according to Claim 8, wherein the at least one toilet arrangement is arranged in a rear region of the at least one passenger cabin and is arranged directly on a pressure bulkhead (22), which serves as delimiting wall.

## Revendications

1. Arrangement de toilette pour un moyen de transport, comprenant
- un premier espace de toilette (10),
- un deuxième espace de toilette (12) voisin de celui-ci et
- une paroi de séparation (14, 28, 30) qui se trouve entre le premier espace de toilette (10) et le deuxième espace de toilette (12),
la paroi de séparation (14) étant supportée avec mobilité et étant conçue pour être amenée dans une position d'ouverture, avec laquelle une séparation entre le premier espace de toilette (10) et le deuxième espace de toilette (20) est annulée ;
la paroi de séparation (14, 28, 30) étant constituée de deux segments de paroi de séparation (28, 30) individuels qui sont supportés avec mobilité ;
un premier segment de paroi de séparation étant conçu pour être rabattu contre une première paroi latérale du premier espace de toilette (10), alors que le deuxième segment de paroi de séparation est conçu pour être pivoté vers l'extérieur dans une zone qui ne se trouve pas dans le premier espace de toilette (10) et pas dans le deuxième espace de toilette (12).

2. Arrangement de toilette selon l'une des revendications précédentes, une direction d'extension principale (16) du premier espace de toilette (10) et une direction d'extension principale (20) du deuxième espace de toilette (12) étant sensiblement perpendiculaires l'une à l'autre.

3. Arrangement de toilette selon l'une des revendications précédentes, le premier espace de toilette (10) possédant une première porte d'espace de toilette (24), laquelle est supportée avec mobilité autour d'un premier axe de charnière de porte (36), le premier axe de charnière de porte (36) étant disposé espacé du deuxième espace de toilette (12).

4. Arrangement de toilette selon l'une des revendications précédentes, une structure d'ameublement de cabine (8) étant disposée au niveau d'une extrémité du premier espace de toilette (10) qui est espacée du deuxième espace de toilette.

5. Arrangement de toilette selon la revendication 4, la structure d'ameublement de cabine (8) étant une cuisine de bord.

6. Arrangement de toilette selon la revendication 4, la structure d'ameublement de cabine (8) étant un troisième espace de toilette (44).

7. Utilisation d'un arrangement de toilette selon l'une des revendications 1 à 6 dans un moyen de transport.

8. Aéronef (48), comprenant au moins une cabine de passagers et au moins un arrangement de toilette selon l'une des revendications 1 à 6 disposé dans celle-ci.

9. Aéronef (48) selon la revendication 8, l'au moins un arrangement de toilette étant disposé dans une zone arrière de l'au moins une cabine de passagers et étant disposé directement contre une cloison étanche (22) servant de paroi de séparation.
